# EUROPEAN PATENT APPLICATION

(11) **EP 4 826 500 A1**
(43) Date of publication of application: **21.10.2026**
(21) Application number: 24918989.5
(22) Date of filing: 19.12.2024
(51) Int. Cl.: G06F 3/0484, G06F 3/0481, G06F 9/451

(54) **USER DEVICE AND METHOD FOR PROVIDING USAGE PATTERN REPORT USING SAME**

(30) Priority: 16.01.2024 KR 20240006948; 06.02.2024 KR 20240018439
(71) Applicant: Samsung Electronics Co., Ltd., Suwon-si, Gyeonggi-do 16677 (KR)
(72) Inventor: CHANG, Hyeongseok, Suwon-si, Gyeonggi-do 16677 (KR); KWAK, Taewon, Suwon-si, Gyeonggi-do 16677 (KR); KIM, Junho, Suwon-si, Gyeonggi-do 16677 (KR); LIM, Yeunwook, Suwon-si, Gyeonggi-do 16677 (KR); HAN, Yonggil, Suwon-si, Gyeonggi-do 16677 (KR)
(74) Representative: HGF
(86) International application number: PCT/KR2024/020723
(87) International publication number: WO 2025/154965

(57) **Abstract**

According to various embodiments, a user device may comprise: a display; a processor; and a memory for storing usage history information and instructions related to at least one application. When the instructions are executed by the processor, the user device can: generate a user interface on the basis of the usage history information in response to execution of an application for managing the usage history information; determine whether a period corresponding to a user interaction exceeds a set period when the user interaction with the user interface is detected; when the period does not exceed the set period, display a first usage pattern report generated on the basis of first usage history information corresponding to a first period; when the period exceeds the set period, transmit, to an external user device, first data generated on the basis of second usage history information corresponding to a second period longer than the first period; acquire, from the external user device, second data generated on the basis of the first data; and display a second usage pattern report generated on the basis of the second data corresponding to the second period. Various other embodiments may be possible.

## Description

### [Technical Field]

Embodiments of the disclosure relate to an electronic device and a method for providing a usage pattern report using the same.

### [Background Art]

With the recent advancement of digital technology, various types of electronic devices (user devices) capable of communication and personal information processing (e.g., mobile communication terminals, personal digital assistants (PDAs), electronic notebooks, smartphones, tablets, and personal computers (PCs)) are being released. As the functions provided by electronic devices become more diverse and electronic devices are widely utilized in daily life, the time spent using electronic devices is gradually increasing. In particular, as the processing speed of electronic devices increases and their storage capacity (e.g., memory) grows, electronic devices can provide users with high-capacity data processing (e.g., video playback, game playing, and digital broadcasting).

As the usage time (e.g., usage amount) of an electronic device increases, it becomes necessary to organize the fields (e.g., categories) in which the electronic device is utilized and to organize the usage time of the electronic device. For example, regarding the usage of the electronic device, the electronic device may statistically identify daily usage information, usage information by day of the week, usage information for one week, and/or usage information for one month, and may provide statistically analyzed data (e.g., data on the usage time of the electronic device) to the user. The electronic device can provide the user with information regarding the usage time of the electronic device by time slot, by day of the week, by date, and/or by week.

The information described above may be provided as related art for the purpose of aiding understanding of the disclosure. No claim or determination is made as to whether any of the foregoing information may be applied as prior art in relation to the disclosure.

### [Disclosure of Invention]

### [Technical Problem]

As the usage time of electronic devices (e.g., smartphones) gradually increases, many people may become addicted to these devices, leading to side effects such as disruptions to daily life or increased anxiety when not carrying the devices. To prevent the problem of a user becoming addicted to an electronic device, the electronic device may provide the user with information related to the device's usage time (e.g., usage amount) (e.g., user interface indicating the device's usage time). For example, the electronic device may graphically display information related to the usage time in the form of charts and/or graphs, and may indicate whether the usage time has increased or decreased in comparison with the previous statistical information. The electronic device may compare past data recorded previously (e.g., one day ago, one week ago, one month ago) with current data recorded at the present time, and may visually display the amount of change in usage time. For example, the user may intuitively identify information regarding changes in the usage time of the electronic device.

According to an embodiment, the electronic device may display information related to the usage time (e.g., usage amount) of the electronic device based on a user interface, and aims to provide the user with guidance information to foster proper usage habits regarding the use of the electronic device. The electronic device may analyze the usage time of the user utilizing the electronic device and provide guidance information to the user based on the analysis results.

The technical objectives to be achieved in this document are not limited to those mentioned above, and other technical objectives not mentioned will be clearly understood by those skilled in the art to which this document belongs from the description below.

### [Solution to Problem]

According to an embodiment, the electronic device may include a display, a processor, and a memory that stores usage history information related to at least one application and instructions. When the instructions are executed by the processor, the electronic device may be configured to: generate a user interface based on the usage history information in response to execution of an application managing the usage history information; determine, when a user interaction with the user interface is detected, whether a period corresponding to the user interaction exceeds a specified period; display, if the period corresponding to the user interaction does not exceed the specified period, a first usage pattern report generated based on first usage history information corresponding to a first period; and transmit, if the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.

According to an embodiment, a method for an electronic device to provide a usage pattern report may include: generating, in response to execution of an application managing usage history information for the electronic device 101, a user interface based on the usage history information; determining, when a user interaction with the user interface is detected, whether a period corresponding to the user interaction exceeds a specified period; displaying, if the period corresponding to the user interaction does not exceed the specified period, a first usage pattern report generated based on first usage history information corresponding to a first period; and transmitting, if the period corresponding to the user interaction exceeds the specified period, first data generated based on second usage history information corresponding to a second period longer than the first period to an external electronic device, obtaining second data generated based on the first data from the external electronic device, and displaying a second usage pattern report generated based on the second data corresponding to the second period.

According to an embodiment, there may be disclosed a non-transitory computer-readable storage medium (or, computer program product) that stores one or more programs for providing a usage pattern report of an electronic device. According to an embodiment, the one or more programs may include instructions that, when executed by the processor 120 of the electronic device 101, are configured to: generate, in response to execution of an application managing usage history information for the electronic device 101, a user interface based on the usage history information; determine, when a user interaction with the user interface is detected, whether a period corresponding to the user interaction exceeds a specified period; display, if the period corresponding to the user interaction does not exceed the specified period, a first usage pattern report generated based on first usage history information corresponding to a first period; and transmit, if the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.

### [Advantageous Effects of Invention]

According to an embodiment, the electronic device may provide the user with a usage pattern report related to the usage time of the electronic device, thereby improving the user experience of the electronic device. For example, based on the usage pattern report, the user can immediately identify problems related to their usage pattern and usage history, and review the recognition of the problems and solutions for the problems. In using the electronic device, it is possible to prevent addiction resulting from the usage of the electronic device.

According to an embodiment, when the user uses the electronic device, the electronic device may generate a usage pattern report specialized for the user and provide the usage pattern report to the user so that the electronic device is used efficiently while preventing addiction. The electronic device may provide guidance information (e.g., summary, usage pattern report) so as to enable the user to use the electronic device efficiently and appropriately.

The effects obtainable from the disclosure are not limited to those mentioned above, and other unmentioned effects will be clearly understood by those skilled in the art to which the disclosure belongs from the description below.

### [Brief Description of Drawings]

In relation to the description of the drawings, the same or similar reference symbols may be used for identical or similar components.
FIG. 1 is a block diagram of an electronic device in a network environment according to an embodiment of the disclosure.
FIG. 2 is a diagram illustrating an example of providing a usage pattern report to the user according to an embodiment of the disclosure.
FIG. 3A is a block diagram of an electronic device according to an embodiment of the disclosure.
FIG. 3B is a block diagram of an AI-related model according to an embodiment of the disclosure.
FIG. 4 is a flowchart illustrating a method for providing a usage pattern report according to an embodiment of the disclosure.
FIG. 5 is a diagram illustrating a first usage pattern report generated based on first usage history information (e.g., daily usage time) according to an embodiment of the disclosure.
FIG. 6 is a diagram illustrating a second usage pattern report generated based on second usage history information (e.g., weekly usage time) according to an embodiment of the disclosure.

### [Mode for the Invention]

Hereinafter, an embodiment of the disclosure will be described in detail with reference to the accompanying drawings so that the disclosure may be easily implemented by those skilled in the art to which the disclosure belongs. However, the disclosure may be implemented in various different forms and is not limited to embodiments described herein. In describing the drawings, the same or similar reference numerals may be used for the same or similar components. In addition, in the drawings and related descriptions, descriptions of well-known functions and configurations may be omitted for clarity and brevity.

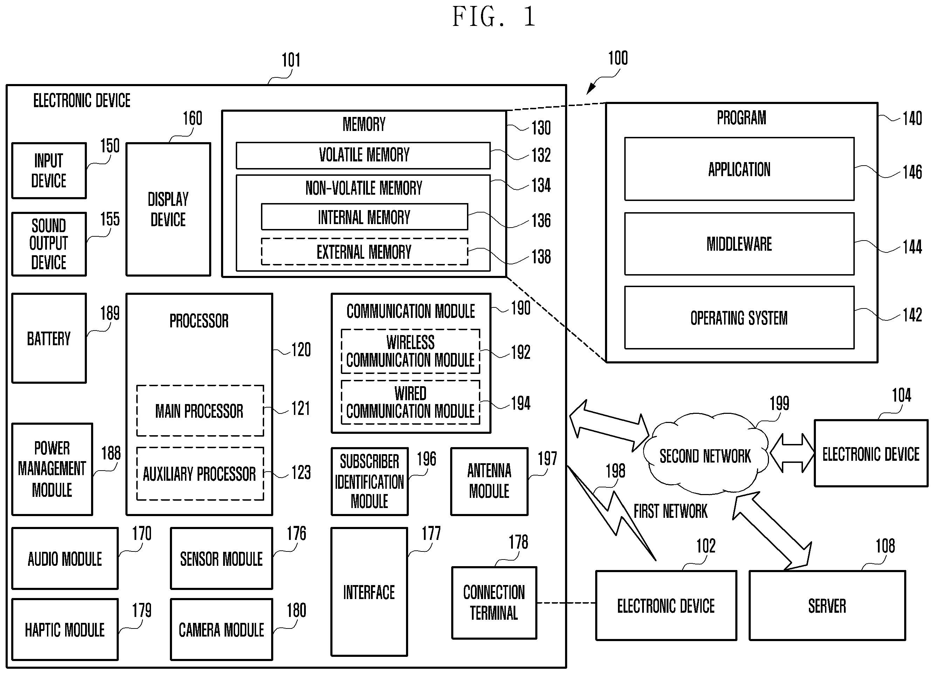

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). For example, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

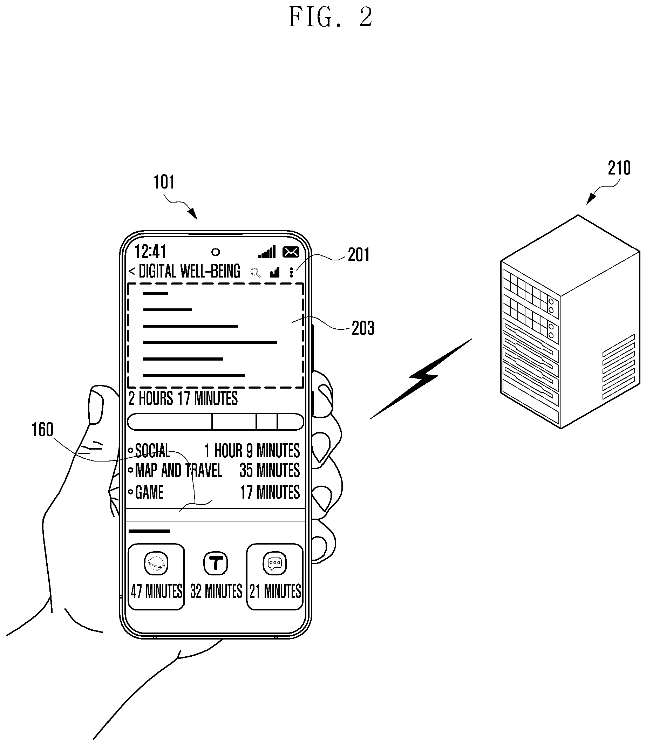

FIG. 2 is a diagram illustrating an example of providing a usage pattern report to the user according to an embodiment of the disclosure.

The electronic device 101 of FIG. 2 may be at least partially similar to the electronic device 101 of FIG. 1 or may further include other embodiments of the electronic device 101. The server 210 of FIG. 2 may be at least partially similar to the server 108 of FIG. 1 or may further include other embodiments of the server 108. According to an embodiment, the electronic device 101 and the server 210 may include components at least partially similar to those of the electronic device 101 of FIG. 1.

According to an embodiment, the electronic device 101 may be operably connected to the server 210 through a communication network and may transmit and receive data to and from each other. For example, the electronic device 101 may transmit a command to the server 210 to at least partially control the server 210, and the server 210 may also transmit a command to at least partially control the electronic device 101.

With reference to FIG. 2, the electronic device 101 may execute a program (e.g., digital well-being application) that manages the usage history of the electronic device 101, and may provide the user with a user interface 201 that displays information related to the usage history (e.g., usage information, usage history information). For example, the electronic device 101 may generate a usage pattern report 203 based on the usage time (e.g., usage history information) of the electronic device 101, and may output the user interface 201 containing the usage pattern report 203 through the display (e.g., display module 160 in FIG. 1). For instance, the electronic device 101 may obtain usage information corresponding to a first period (e.g., about one day) and compare it with usage information obtained prior to the first period. If today is Tuesday, the electronic device 101 may compare first usage information corresponding to Tuesday with second usage information corresponding to Monday, which is about one day before Tuesday. For another example, if today is the Monday of the second week, the electronic device 101 may compare first usage information corresponding to the Monday of the first week with second usage information corresponding to the Monday of the second week. The electronic device 101 may generate a first usage pattern report based on the first usage information and the second usage information, and may display the generated first usage pattern report. According to an embodiment, the electronic device 101 may compare or analyze first usage information at a current point in time and second usage information at a past point in time based on a configured artificial intelligence (AI) model, and may generate a first usage pattern report based on the analysis results.

According to an embodiment, the usage information (e.g., usage history information) may include at least one of the start time of utilization of a specific application, the end time of utilization of the specific application, usage time information of the electronic device 101 (e.g., time information when the electronic device 101 is in an active state), usage time information when the user is walking, and/or usage time information when the user is driving. For example, the electronic device 101 may detect that the user is walking based on sensing information (e.g., walking-related information) obtained using at least one sensor (e.g., acceleration sensor, gyro sensor, and/or angular velocity sensor), and may obtain usage time information of the electronic device 101 in the walking state (e.g., usage time information when the user is walking). For example, the electronic device 101 may detect that the user is driving based on connection information as to an external electronic device (e.g., electronic device in a vehicle, vehicle equipment) connected to the electronic device 101 and sensing information (e.g., information on a situation where acceleration is exceeding a specific speed), and may obtain usage time information of the electronic device 101 in a driving state (e.g., usage time information when the user is driving).

According to an embodiment, the usage pattern report may be prepared in a text form and, when a change has occurred in the current usage pattern compared to a previously recorded (e.g., stored) usage pattern, may include guidance information that induces an efficient usage pattern based on the change. For example, if today's usage time for the electronic device 101 has increased more than a preset threshold compared to yesterday's usage time, the usage pattern report may include guidance information notifying that the usage time of the electronic device 101 has increased in comparison to before. For example, the guidance information may include text information that efficiently guides the user's usage patterns, such as, "Today's electronic device usage has increased by about a few hours compared to yesterday. The daily usage time of the electronic device is too high. It is necessary to reduce the daily usage time of the electronic device". According to an embodiment, the usage pattern report may be generated based on a configured artificial intelligence model and may be prepared in a text form based on set words and set contexts.

According to an embodiment, the usage pattern report is not limited to sentences in a text form and may be prepared in a form including at least one piece of content (e.g., image, audio signal).

According to an embodiment, the electronic device 101 may share a usage pattern report with another electronic device (e.g., electronic device 102 in FIG. 1, wearable electronic device), and the usage pattern report may be displayed through the display of the other electronic device.

According to an embodiment, the electronic device 101 may detect a user interaction while the program for managing usage history is running, and may identify a usage period (e.g., first usage period, second usage period) corresponding to the detected user interaction (e.g., first user interaction, second user interaction). For example, when a first user interaction is detected, the electronic device 101 may identify first usage history information corresponding to a first usage period (e.g., about 1 day) and may generate a first usage pattern report based on the identified first usage history information. As another example, when a second user interaction is detected, the electronic device 101 may identify second usage history information corresponding to a second usage period (e.g., about one week, about seven days) and may generate a second usage pattern report based on the identified second usage history information.

According to an embodiment, when analyzing and comparing usage patterns, the electronic device 101 may generate a usage pattern report by autonomously utilizing an artificial intelligence model if the amount of data in the comparison group (e.g., collection period of usage history information) is less than a preset threshold (e.g., about 2 days). For example, if a first usage pattern at the current time is compared with a second usage pattern at the time of yesterday, the electronic device 101 may independently use an artificial intelligence model (e.g., AI model) to generate a first usage pattern report. The electronic device 101 may store the artificial intelligence model in the memory (e.g., memory 130 in FIG. 1).

According to an embodiment, when analyzing and comparing usage patterns, if the amount of data in the comparison group (e.g., collection period of usage history information) exceeds the preset threshold (e.g., about 2 days), the electronic device 101 may at least partially encode (e.g., encoding, encryption) first information related to the usage pattern of the electronic device 101 and transmit the encoded first information to an external electronic device (e.g., server 108 in FIG. 1 or server 210 in FIG. 2). Upon receiving the encoded first information, the external electronic device 108 may analyze and compare the encoded first information based on an artificial intelligence model (e.g., AI model). For example, the external electronic device 108 may compare a first usage pattern at the current time with a second usage pattern over a period of about one week and may generate second information based on the difference between the first usage pattern and the second usage pattern. For example, the second information may include a usage pattern report (e.g., second usage pattern report) generated by the external electronic device 108. The external electronic device 108 may transmit the generated second information to the electronic device 101. Upon receiving the second information, the electronic device 101 may decode (e.g., decoding) the second information and generate a second usage pattern report based on the decoded second information. According to an embodiment, the second usage pattern report may be generated by the external electronic device 108 or generated directly by the electronic device 101. The electronic device 101 may display the second usage pattern report through the display (e.g., display module 160 in FIG. 1). For example, when the electronic device 101 receives the second information from the external electronic device 108, it may decode (e.g., decoding) the second information to identify the first information and generate the second usage pattern report in which the first information is at least partially reflected. The electronic device 101 may display the second usage pattern report through the display 160. According to an embodiment, if the comparison group corresponds to usage pattern information for about one week, the electronic device 101 may perform analysis and comparison of the usage pattern information based on another external electronic device (e.g., server 108). The server 108 may analyze and compare usage pattern information for the electronic device 101 based on an artificial intelligence model (e.g., AI model). The electronic device 101 may obtain information (e.g., second usage pattern report) for which the analysis and comparison have been completed from the server 108, and may display the obtained second usage pattern report through the display 160.

According to an embodiment, the electronic device 101 may execute a program for managing the usage history and may detect user interactions associated with the program (e.g., first user interaction, second user interaction). When a user interaction is detected, the electronic device 101 may obtain usage history information based on a usage period corresponding to the user interaction. For example, when a first user interaction (e.g., usage history information of the electronic device 101 for about 1 day) is detected, the electronic device 101 may obtain usage history information collected for about 1 day and may generate a first usage pattern report based on the obtained usage history information. As another example, when a second user interaction (e.g., usage history information of the electronic device 101 for about 7 days) is detected, the electronic device 101 may obtain usage history information collected for about 7 days and may generate a second usage pattern report based on the obtained usage history information.

According to an embodiment, the electronic device 101 may provide the user with a usage pattern report generated based on an artificial intelligence model so that the user becomes aware of problems (e.g., addiction problems) associated with the utilization of the electronic device 101. The electronic device 101 may provide guidance information (e.g., summary, usage pattern report) so as to prevent addiction phenomena associated with the use of the electronic device 101 and enable the electronic device 101 to be utilized more efficiently.

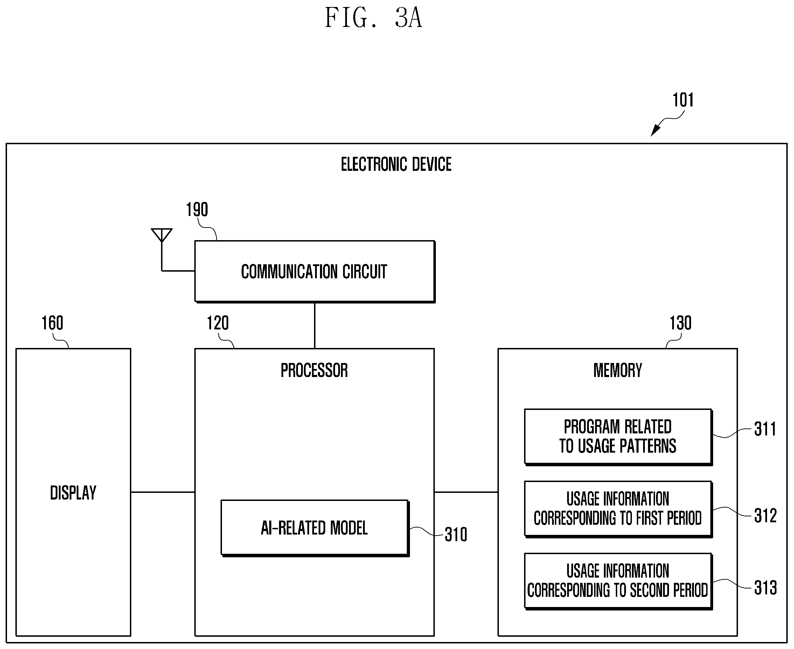

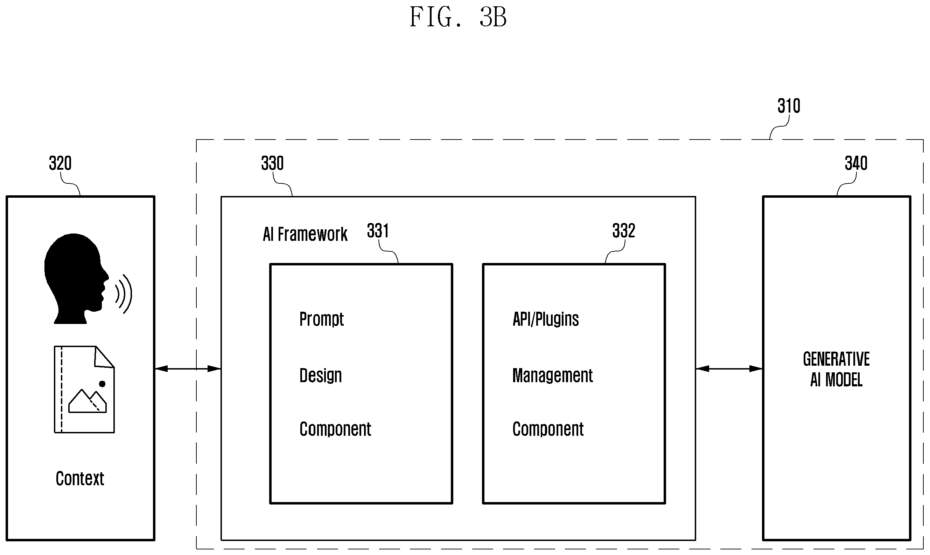

FIG. 3A is a block diagram of an electronic device according to an embodiment of the disclosure. FIG. 3B is a block diagram of an AI-related model according to an embodiment of the disclosure.

The electronic device 101 of FIG. 3A may be at least partially similar to the electronic device 101 in FIG. 1, or may further include other embodiments of the electronic device 101. According to an embodiment, the electronic device 101 may include components at least partially similar to those of the electronic device 101 in FIG. 1. The AI-related model 310 in FIG. 3B may be at least partially similar to the AI-related model 310 in FIG. 3A, or may further include other embodiments of the AI-related model 310.

With reference to FIG. 3A, the electronic device 101 may include a processor 120 (e.g., processor 120 in FIG. 1), a memory 130 (e.g., memory 130 in FIG. 1), a display 160 (e.g., display module 160 in FIG. 1), and/or a communication circuit 190 (e.g., communication module 190 in FIG. 1). The memory 130 of the electronic device 101 may store a program 311 related to a usage pattern, usage information 312 corresponding to a first period, and/or usage information 313 corresponding to a second period. The processor 120 of the electronic device 101 may be controlled at least partially based on the AI-related model 310 (e.g., artificial intelligence-related model).

According to an embodiment, the processor 120 of the electronic device 101 may execute programs (e.g., programs 140 in FIG. 1) stored in the memory 130 to control at least one other component (e.g., hardware or software component) and perform various data processing or operations. For example, the processor 120 may execute a program 311 related to usage patterns (e.g., application managing usage history information) stored in the memory 130 and may manage usage patterns (e.g., usage time, usage amount, usage frequency, and/or usage cycle) of the electronic device 101 utilized by the user. The processor 120 may identify usage patterns over a specified period and may generate a usage pattern report based on the identified usage patterns. The processor 120 may provide the usage pattern report to the user by displaying the usage pattern report through the display 160. The processor 120 may provide the user with a usage pattern report (e.g., guidance information) so as to enable the user to utilize the electronic device 101 efficiently and safely. According to an embodiment, the processor 120 may be operably, functionally, and/or electrically connected to the memory 130, the display 160, and/or the communication circuit 190.

According to an embodiment, the memory 130 of the electronic device 101 may store at least one of a program 311 related to usage patterns (e.g., application managing usage history information), usage information 312 corresponding to a first period, and/or usage information 313 corresponding to a second period. For example, the program 311 related to usage patterns may graphically represent the total usage time for the user utilizing the electronic device 101, and for each application installed on the electronic device 101, at least one of usage time (e.g., start time, end time), usage patterns and usage frequency, and/or usage information collected during a specified usage period. The processor 120 may graphically display various information related to the utilization of the electronic device 101 based on the program 311 related to usage patterns. For example, when the program 311 related to usage patterns is being executed, the processor 120 may prepare a user interface containing graphically represented usage-related information and may display the user interface through the display 160. According to an embodiment, the processor 120 may generate a usage pattern report based on usage information collected over a specified period (e.g., usage history information), and may at least partially display the generated usage pattern report based on the user interface.

According to an embodiment, the memory 130 may store usage information 312 corresponding to a first period and usage information 313 corresponding to a second period. For example, the first period may include a period of about 1 day, and the second period may include a period of about 7 days. The usage information 312 corresponding to the first period may include first usage history information for which the electronic device 101 has been used for approximately one day prior to the current time. The usage information 313 corresponding to the second period may include second usage history information for which the electronic device 101 has been used for approximately 7 days prior to the current time. According to an embodiment, the first period may be set to a period shorter than a specified period, and the second period may be set to a period longer than the specified period. For example, if the specified period is about 2 days, the first period may be set to about 1 day, and the second period may be set to a period exceeding 2 days (e.g., about 7 days).

According to an embodiment, the usage information 312 corresponding to the first period may include at least one of information and category information regarding at least one application used (e.g., executed) during the first period (e.g., about 1 day), information on the time when the at least one application is executed, information on the ratio of the time when the at least one application is executed to the total usage time of the electronic device 101, information on the usage time when the user is walking, information on the usage time when the user is driving, and/or information on the average usage time for the at least one application. According to an embodiment, the usage information 313 corresponding to the second period may include at least one of information and category information for at least one application used (e.g., executed) during the second period (e.g., about 7 days), information on the time when the at least one application is executed, information on the ratio of the time when the at least one application is executed to the total usage time of the electronic device 101, information on the usage time when the user is walking, information on the usage time when the user is driving, and/or information on the average usage time for the at least one application.

For example, the processor 120 may store usage history information collected during a usage period corresponding to a period shorter than the specified period in the memory 130 as usage information 312 corresponding to the first period. When an analysis request (e.g., first user interaction) related to a usage pattern during the first period is identified, the processor 120 may generate a first usage pattern report corresponding to the first period based on the AI-related model 310 of the processor 120. The processor 120 may display the generated first usage pattern report through the display 160.

According to an embodiment, in response to a command (e.g., first user interaction) for requesting a first usage pattern report corresponding to a period shorter than the specified period, the electronic device 101 may independently generate a first usage pattern report based on the AI-related model 310. The electronic device 101 may autonomously generate the first usage pattern report and provide it to the user.

For example, the processor 120 may store usage history information collected during a usage period longer than the specified period in the memory 130 as usage information 313 corresponding to the second period. When the processor 120 identifies an analysis request (e.g., second user interaction) related to usage patterns during a second period, the processor 120 may transmit first data containing the usage information 313 corresponding to the second period to an external electronic device (e.g., server 108). For example, upon receiving the first data, the external electronic device may analyze and compare the first data based on an AI-related model stored in the external electronic device. The external electronic device may generate second data (e.g., second usage pattern report) based on the first data. For example, the AI-related model of the external electronic device may compare current usage information with the usage information 313 corresponding to the second period included in the first data. For example, the AI-related model of the external electronic device may generate a second usage pattern report corresponding to the second period based on the usage information 313 corresponding to the second period. The external electronic device may transmit the generated second usage pattern report to the electronic device 101. According to an embodiment, the processor 120 of the electronic device 101 may display the second usage pattern report received from the external electronic device (e.g., server) through the display 160.

According to an embodiment, the second usage pattern report may be generated by the external electronic device and then transmitted to the electronic device 101, or may be generated directly by the electronic device 101.

According to an embodiment, in response to a command (e.g., second user interaction) requesting for a second usage pattern report for a period exceeding the specified period, the electronic device 101 may transmit the usage information 313 corresponding to the second period to the external electronic device (e.g., server), and may perform analysis and comparison operations by utilizing the external electronic device. For example, the AI-related model of the external electronic device may generate a second usage pattern report based on the usage information 313 corresponding to the second period. Upon receiving the second usage pattern report generated by the external electronic device, the electronic device 101 may display the second usage pattern report through the display 160.

According to an embodiment, if comparison and analysis of usage patterns for a usage period (e.g., second period) exceeding the specified period are required, the electronic device 101 may transmit the usage information 313 corresponding to the second period to an external electronic device (e.g., server 108) so that comparison and analysis are performed on the external electronic device. For example, the external electronic device may analyze the usage information 313 corresponding to the second period based on an AI-related model and generate a second usage pattern report based on the usage information 313 corresponding to the second period. The external electronic device may transmit the generated second usage pattern report to the electronic device 101. Upon receiving the second usage pattern report from the external electronic device, the electronic device 101 may display the second usage pattern report through the display 160.

According to an embodiment, the electronic device 101 may be connected to the external electronic device (e.g., server 108) based on the communication circuit 190 and may transmit and receive data to and from the external electronic device. For example, the processor 120 may transmit the usage information 313 corresponding to the second period to the external electronic device and may receive a second usage pattern report generated by the external electronic device. Upon receiving the second usage pattern report, the processor 120 may display the second usage pattern report through the display 160.

According to an embodiment, the electronic device 101 may provide the user with a usage pattern report (e.g., first usage pattern report and/or second usage pattern report) generated based on an artificial intelligence model (e.g., AI-related model) so that the user becomes aware of problems (e.g., addiction problem) associated with the utilization of the electronic device 101. The electronic device 101 may provide guidance information (e.g., summary, usage pattern report) to the user so that the electronic device 101 can be utilized more efficiently while preventing addiction phenomena associated with the usage of the electronic device 101.

According to an embodiment, the electronic device 101 may extract at least one word (e.g., application name, application icon information) included in a usage pattern report based on the usage pattern report (e.g., first usage pattern report and/or second usage pattern report). The electronic device 101 may identify whether data corresponding to the at least one extracted word is included in the user interface, and if such data is included in the user interface, it may display the data with a visual effect. For example, if at least one extracted word is "camera", the electronic device 101 may determine whether data related to "camera" (e.g., camera application, camera icon, camera text information) is included in the user interface. If data related to "camera" is included in the user interface, the electronic device 101 may display the corresponding data with a visual effect (e.g., highlight effect, emphasis effect).

With reference to FIG. 3B, the AI-related model 310 of the electronic device 101 may include an AI framework 330 and a generative AI model 340. According to an embodiment, the AI-related model 310 may perform comparison operations and analysis operations based on various types of input information 320 (e.g., natural language, images, and/or context information), and may generate result data (e.g., usage pattern report) according to the comparison operations and analysis operations.

For example, various types of input information 320 may include utterance information by the user (e.g., natural language, audio information), image information, video information, and/or context information. The context information may include supplementary information related to the usage of the electronic device 101 (e.g., information associated with application execution, location information of the electronic device 101 when an application is executed, and/or movement information of the electronic device 101). The input information 320 may include mixed information in which at least two pieces of information are mixed based on audio information, image information, video information, and/or context information. According to an embodiment, the input information 320 may include usage history information related to the usage of the electronic device 101 (e.g., usage information collected during a specific period), the usage information 312 corresponding to a first period in FIG. 3A, and/or the usage information 313 corresponding to a second period in FIG. 3A.

With reference to FIG. 3B, the AI framework 330 may include a prompt design component 331 and an API/plugin management component 332. For example, the prompt design component 331 may generate a prompt that can be analyzed by a generative AI model 340 in relation to the input information 320. The prompt design component 331 may include an AI component that uses a machine learning algorithm and/or a neural network (e.g., artificial neural network (ANN) algorithm) capable of efficiently processing the input information 320 in a situation where the input information 320 is continuously accumulated. According to an embodiment, the prompt design component 331 may generate an AI-related prompt based on the input information 320 and may transfer the generated AI-related prompt to the generative AI model 340. For example, the API/plugin management component 332 may implement a channel for communicating with an external electronic device and, through the channel, may perform the function of accessing data of the external electronic device. According to an embodiment, the API/plugin management component 332 may obtain data of the external electronic device based on a communication connection with the external electronic device.

According to an embodiment, the AI framework 330 may provide data from the external electronic device to the prompt design component 331 and may control the prompt design component 331 to generate an AI-related prompt by utilizing the data. According to another embodiment, the AI framework 330 may directly transfer data from the external electronic device to the generative AI model 340.

With reference to FIG. 3B, the generative AI model 340 may include an artificial intelligence neural network algorithm that generates a new type of data (e.g., usage pattern report) based on the input information 320. For example, the generative AI model 340 may include a model that generates images (e.g., generative adversarial network (GAN) and/or variational auto encoder (VAE)), and/or a model that generates linguistic expressions (e.g., text) (e.g., model trained to produce statistical output values based on input values, CHAT-GPT3, CHAT-GPT4). The generative AI model 340 may recognize various types of data (e.g., text, image, video, speech) corresponding to the input information 320 and may include a large multimodal model (LMM) that generates new data (e.g., usage pattern report).

According to an embodiment, the electronic device 101 may use the AI-related model 310 to compare and analyze the input information 320 and generate a usage pattern report including information according to the analysis results. According to an embodiment, the AI-related model 310 is not limited to being included in the electronic device 101 and may also be included in the external electronic device (e.g., server 108). According to an embodiment, the electronic device 101 may obtain a usage pattern report generated by the external electronic device and may provide the obtained usage pattern report to the user.

According to an embodiment, the electronic device 101 may include a display 160, a processor 120, and a memory 130 that stores usage history information related to at least one application and instructions. When executed by the processor 120, the instructions may be configured to cause the electronic device 101 to: generate a user interface based on the usage history information in response to execution of an application managing the usage history information; determine, when a user interaction with the user interface is detected, whether a period corresponding to the user interaction exceeds a specified period; display, if the period corresponding to the user interaction does not exceed the specified period, a first usage pattern report generated based on first usage history information corresponding to a first period; and transmit, if the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.

According to an embodiment, when executed by the processor 120, the instructions may be configured to cause the electronic device 101 to display one of the first usage pattern report and the second user pattern report based on the generated user interface.

According to an embodiment, when executed by the processor 120, the instructions may be configured to cause the electronic device 101 to perform at least some encoding operations based on the at least one application and category information associated with the at least one application, and generate the first data containing the encoded information.

According to an embodiment, the second data may include the second usage pattern report generated based on analysis results of the first data after the first data is analyzed by the external electronic device.

According to an embodiment, when executed by the processor 120, the instructions may be configured to cause the electronic device 101 to perform at least some decoding operations based on the second data when the second data is obtained from the external electronic device, generate the second usage pattern report based on the decoded information, and display the second usage pattern report through the display 160.

According to an embodiment, the first usage pattern report and the second usage pattern report may include usage pattern information classified based on the type of the at least one application and the category information of the at least one application.

According to an embodiment, the first usage pattern report and the second usage pattern report may include usage pattern information classified based on the user's environment information (e.g., driving situation, walking situation).

According to an embodiment, when executed by the processor 120, the instructions may be configured to cause the electronic device 101 to extract at least one word based on a usage pattern report being displayed through the display, and display usage pattern information corresponding to the extracted at least one word with a highlight.

According to an embodiment, when executed by the processor 120, the instructions may be configured to cause the electronic device 101 to display guidance information related to the usage pattern information in response to a user input regarding the usage pattern information.

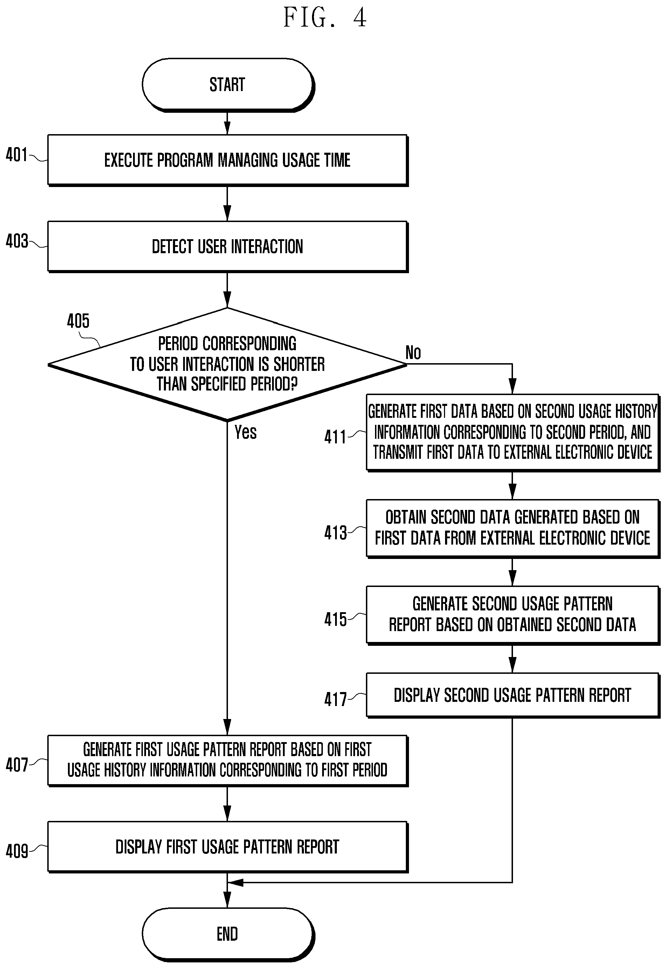

FIG. 4 is a flowchart illustrating a method for providing a usage pattern report according to an embodiment of the disclosure.

In the following embodiments, operations may be performed in sequence, but are not necessarily performed in sequence. For example, the order of operations may be changed, and at least two operations may be performed in parallel.

According to an embodiment, operations 401 to 417 may be understood to be performed by the processor (e.g., processor 120 in FIG. 3A) of the electronic device (e.g., electronic device 101 in FIG. 3A). The electronic device of FIG. 4 may be at least partially similar to the electronic device 101 of FIG. 3A, or may include other embodiments of the electronic device 101.

According to an embodiment, when a program (e.g., digital well-being program, digital well-being application) related to a usage pattern (e.g., usage pattern resulting from the user utilizing the electronic device 101) is installed in the memory 130, the processor 120 of the electronic device 101 may execute the program related to a usage pattern. For example, the usage pattern may include at least one of the total usage time of the electronic device 101, the usage time for a specific application installed on the electronic device 101, the execution ratio of a specific application, the usage frequency of a specific application, and/or the usage cycle of a specific application. When a program related to a usage pattern is executed, the processor 120 may display a user interface in which the usage pattern appears at least partially on the display (e.g., display 160 in FIG. 3A).

At operation 401, the processor 120 of the electronic device 101 may execute a program that manages the usage time (e.g., program related to a usage pattern). For example, in response to a user input (e.g., generation of execution command), the processor 120 may execute the program that manages the usage time. The processor 120 may display a user interface according to the execution of the program. The program may provide the user with information regarding at least one of the total usage time of the electronic device 101, the usage time for a specific application installed on the electronic device 101, the execution ratio of a specific application, the usage frequency of a specific application, and/or the usage cycle of a specific application. The processor 120 may display a user interface containing at least some of the above information through the display 160.

At operation 403, the processor 120 may detect a user interaction. For example, the user interaction may include a touch input, gesture input, and/or command input of the user on the user interface being displayed through the display 160. For example, when analyzing usage patterns, the processor 120 may display approximately two menus with different usage periods (e.g., first menu in which usage patterns are analyzed based on a first period, second menu in which usage patterns are analyzed based on a second period) and may detect user interactions based on the menus. When setting approximately two different usage periods, the processor 120 may set a first period corresponding to a period shorter than a specified threshold and a second period exceeding the specified threshold. According to an embodiment, the electronic device 101 may be configured to generate a first user interaction input in response to execution of the program that manages the usage time. For example, when the program managing the usage time is executed, the processor 120 may automatically detect the input of a first user interaction and implement a user interface based on the usage period corresponding to the first user interaction.

At operation 405, the processor 120 may determine whether the period corresponding to the user interaction is shorter than a specified period (e.g., specified threshold). For example, when a user interaction according to the first menu (e.g., first user interaction) is identified, the processor 120 may identify the period corresponding to the first user interaction. For example, if the specified period (e.g., specified threshold) is about 2 days, the first period corresponding to the first user interaction may be identified as about 1 day.

If the period corresponding to the user interaction is shorter than the specified period (e.g., specified threshold) at operation 405, at operation 407, the processor 120 may generate a first usage pattern report based on first usage history information corresponding to the first period. For example, the first usage history information may include usage pattern information for the electronic device 101 collected during the first period (e.g., approximately one day prior to the current date). According to an embodiment, the electronic device 101 may store usage pattern information (e.g., first usage history information) collected within the specified period in the memory 130. The electronic device 101 may modify and change the first usage history information stored in the memory 130 as the date changes. At operation 407, the processor 120 may generate a first usage pattern report based on first usage history information loaded based on the current date (e.g., usage pattern information collected based on yesterday's date). For example, the first usage pattern report may be prepared in a text form, and may include guidance information that induces efficient utilization of the electronic device 101 based on a change that has occurred in the current (e.g., today's date) usage pattern compared with a previously recorded (e.g., saved) usage pattern (e.g., usage pattern information collected based on yesterday's date). For example, to generate a first usage pattern report, the AI-related model (e.g., AI-related model 310 in FIG. 3A) of the processor 120 may compare usage pattern information collected based on yesterday's date with usage pattern information collected based on today's date, and may generate the first usage pattern report based on the data where a change has occurred. According to an embodiment, if the first period is shorter than the specified threshold, the electronic device 101 may generate the first usage pattern report by itself by using the AI-related model 310.

At operation 409, the processor 120 may display the first usage pattern report generated based on the user interaction (e.g., first user interaction) through the display 160. According to an embodiment, the electronic device 101 may independently generate the first usage pattern report based on the first usage history information collected during the first period shorter than the specified period, and may provide the first usage pattern report to the user.

At operation 405, the processor 120 may determine whether the period corresponding to the user interaction is shorter than the specified period (e.g., specified threshold). For example, if a user interaction according to the second menu (e.g., second user interaction) is identified, the processor 120 may identify a period corresponding to the second user interaction.

If the period corresponding to the user interaction exceeds the specified period (e.g., specified threshold) at operation 405, at operation 411, the processor 120 may generate first data based on second usage history information corresponding to the second period and transmit the first data to an external electronic device (e.g., server 108 in FIG. 1). For example, the first data may include data that is at least partially encoded based on the second usage history information (e.g., information related to the at least one application and category information related to the at least one application). For example, the processor 120 may at least partially encode the name and category information of the used application based on the information related to the usage of the electronic device 101, and may store the encoded information as first data. The second usage history information may include usage information regarding both data a collected over a period of about one week (e.g., last week) based on today and data b collected over a period of about four weeks (e.g., one month) based on today. The usage information may include usage information a extracted based on data a and usage information b extracted based on data b. The above usage information (e.g., usage information a, usage information b) may include information about at least one of the usage start time of a specific application, the usage end time of the specific application, the usage time of the electronic device 101 (e.g., time information when the electronic device 101 is in an active state), the usage time when the user is walking, and/or the usage time when the user is driving. The processor 120 may generate the first data based on the second usage history information (e.g., data a and/or data b) collected during the second period. The processor 120 may transmit the first data to the server 108.

According to an embodiment, the electronic device 101 may detect that the user is walking based on sensing information (e.g., walking-related information) obtained through at least one sensor (e.g., acceleration sensor, gyro sensor, and/or angular velocity sensor), and may obtain usage time information (e.g., usage information a, usage information b) for the electronic device 101 in a situation where the user is walking.

According to an embodiment, the electronic device 101 may detect that the user is driving based on connection information and sensing information (e.g., information on a situation where acceleration is exceeding a specific speed) for an external electronic device (e.g., electronic device in the vehicle, vehicle equipment) connected to the electronic device 101, and may obtain usage time information (e.g., usage information a, usage information b) for the electronic device 101 in a situation where the user is driving.

According to an embodiment, upon receiving the first data, the server 108 may perform analysis operations and comparison operations on the first data based on the AI-related model of the server 108. For example, the server 108 may obtain the second usage history information (e.g., data a and/or data b) included in the first data, and may perform analysis and comparison operations on the second usage history information by using the AI-related model. The AI-related model may compare data a collected over a period of about one week (e.g., last week) and data b collected over a period of about four weeks (e.g., one month) as of today, and analyze the differences. According to an embodiment, the AI-related model of the server 108 may generate a second usage pattern report based on data a and/or data b. For example, the second usage pattern report may be prepared in a text form, and a previously recorded (e.g., stored) usage pattern (e.g., data b collected over a period of about 4 weeks (e.g., one month)) and a current usage pattern (e.g., data a collected over a period of about 1 week (e.g., last week)) may be compared and/or analyzed. If a change in usage pattern is identified, the server 108 may generate guidance information that induces efficient utilization of the electronic device 101 based on the change. For example, to generate the second usage pattern report, the AI-related model of the server 108 may compare data a collected over a period of about one week (e.g., last week) with data b collected over a period of about four weeks (e.g., one month), and generate the second usage pattern report based on some of the data where a change has occurred. The server 108 may generate second data based on the generated second usage pattern report. The server 108 may transmit the second data to the electronic device 101.

At operation 413, the processor 120 may obtain the second data generated based on the first data from the external electronic device (e.g., server 108). For example, the electronic device 101 may transmit first data from the electronic device 101 to the external electronic device, and receive second data (e.g., second usage pattern report) generated based on the first data from the external electronic device.

At operation 415, the processor 120 may generate a second usage pattern report based on the obtained second data. For example, the processor 120 may perform at least some decoding operations (e.g., unpackaging operations) based on the second data and may generate the second usage pattern report based on the decoded information. According to an embodiment, the second usage pattern report may be generated based on the AI-related model of the external electronic device (e.g., server 108) and provided to the electronic device 101 from the server 108. According to another embodiment, the second usage pattern report may be generated directly by the electronic device 101 based on the AI-related model 310 of the electronic device 101. For example, the second data obtained from the external electronic device 108 may include data of analysis performed on the external electronic device 108. In this case, the processor 120 of the electronic device 101 may perform at least some decoding operations based on the second data, obtain analysis data corresponding to the decoded second data, and generate a second usage pattern report based on the obtained analysis data. According to an embodiment, the generation of the second usage pattern report is not limited to the external electronic device (e.g., server 108), and may be performed by the AI-related model 310 of the electronic device 101.

At operation 417, the processor 120 may display the second usage pattern report through the display 160. According to an embodiment, the electronic device 101 may transmit second usage history information collected during the second period exceeding the specified period to the external electronic device (e.g., server 108), and comparison and analysis operations regarding the second usage history information may be performed by the AI-related model of the external electronic device. For example, the external electronic device may provide the electronic device 101 with second data containing analysis data based on the comparison and analysis operations. The processor 120 of the electronic device 101 may generate a second usage pattern report based on the second data obtained from the external electronic device and may provide the second usage pattern report to the user.

According to an embodiment, when providing a usage pattern report (e.g., first usage pattern report and/or second usage pattern report) to the user, the electronic device 101 may extract at least one word (e.g., application name, application icon information) included in the usage pattern report. The electronic device 101 may examine whether data corresponding to the at least one extracted word is included in the user interface. If such data is included in the user interface, the electronic device 101 may display the data with a visual effect.

For example, if at least one extracted word is related to "Internet" or "web browser", the electronic device 101 may identify whether data related to "Internet" or "web browser" (e.g., internet surfing application, internet surfing icon) is included in the user interface. If data related to "Internet" or "web browser" is included in the user interface, the electronic device 101 may display the corresponding data with visual effects (e.g., highlight effect, emphasis effect).

According to an embodiment, the usage pattern report (e.g., first usage pattern report and/or second usage pattern report) may include guidance information for proper usage habits of the electronic device 101 based on usage time information while walking and/or usage time information while driving. For example, if the electronic device 101 is frequently used while walking (e.g., while driving), the usage pattern report may include guidance information recommending that the electronic device 101 be used less while walking.

According to an embodiment, the electronic device 101 may generate a usage pattern report by taking into account the usage environment of the electronic device 101 (e.g., usage condition, walking state, driving state). The electronic device 101 may generate a usage pattern report containing precautions and/or proper usage guides in relation to the usage pattern of the electronic device 101.

According to an embodiment, the electronic device 101 may analyze information related to the usage of the electronic device 101 (e.g., time information, usage pattern information) based on the AI-related model 310, and may identify the difference at the current point in time by comparing past usage patterns with current usage patterns. Based on the above difference, the electronic device 101 may generate a usage pattern report for efficient utilization of the electronic device 101. The electronic device 101 may provide the user with a usage pattern report generated based on the AI-related model 310, and may provide guidance information for the user to utilize the electronic device 101 more efficiently.

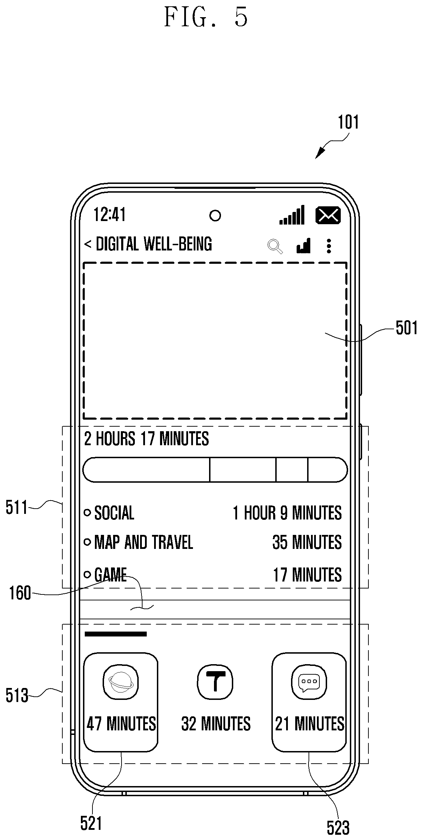

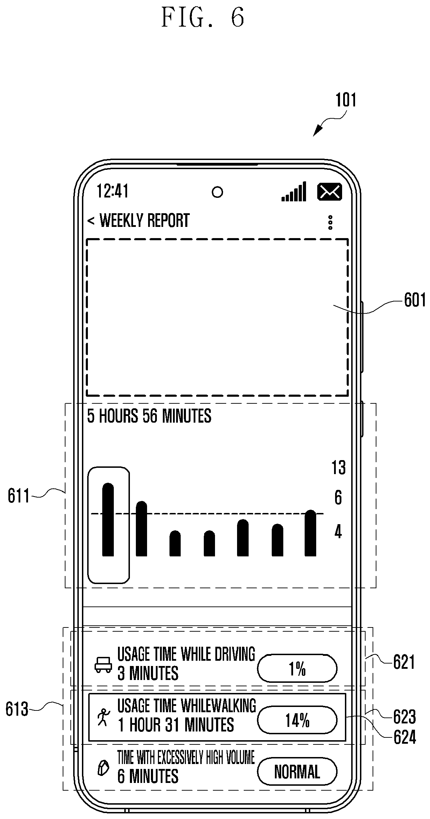

FIG. 5 is a diagram illustrating a first usage pattern report generated based on first usage history information (e.g., daily usage time) according to an embodiment of the disclosure. FIG. 6 is a diagram illustrating a second usage pattern report generated based on second usage history information (e.g., weekly usage time) according to an embodiment of the disclosure.

The electronic device 101 in FIGS. 5 and 6 may be at least partially similar to the electronic device 101 in FIGS. 1 and 2, or may further include other embodiments of the electronic device 101. According to an embodiment, the electronic device 101 may include components at least partially similar to those of the electronic device 101 in FIG. 1.

With reference to FIGS. 5 and 6, the electronic device 101 may include a processor 120 (e.g., processor 120 in FIG. 3A), a memory 130 (e.g., memory 130 in FIG. 3A), a display 160 (e.g., display 160 in FIG. 3A), and/or a communication circuit 190 (e.g., communication module 190 in FIG. 3A). The processor 120 of the electronic device 101 may generate a first usage pattern report 501 shown in FIG. 5 and a second usage pattern report 601 shown in FIG. 6 based on an AI-related model (e.g., AI-related model 310 in FIG. 3A), and may display the usage pattern report 501 or 601 through the display 160. In response to execution of a program that manages the usage time, the electronic device 101 may display a user interface in which the usage pattern for the electronic device 101 is identified. The electronic device 101 may display a user interface that at least partially includes a usage pattern report 501 or 601 generated based on the AI-related model 310.

With reference to FIG. 5, the processor 120 may display a first user interface prepared based on first usage history information (e.g., daily usage time) corresponding to a first period when the program managing the usage time is executed. For example, the first user interface may include a first usage pattern report 501 that advises on the efficient utilization of the electronic device 101. According to an embodiment, when displaying the first user interface, the processor 120 may list and display applications among a plurality of applications installed on the electronic device 101 in order of frequent usage during the first period. For example, the processor 120 may classify the plurality of applications based on category information (e.g., social application, map application, Internet-related application, and/or game-related application). The processor 120 may display corresponding category information 511 in order of applications that have been used relatively frequently during the first period. According to an embodiment, when displaying the first user interface, the processor 120 may check the usage time corresponding to each application and may arrange applications with relatively high usage times in order. The processor 120 may display frequently used application information 513 according to the usage of the applications arranged above.

The electronic device 101 according to FIG. 5 may collect usage pattern information corresponding to the first period (e.g., about one day ago, one day ago) based on the current time, and may compare or analyze the usage pattern information as of current time. For example, the processor 120 may compare first usage pattern information collected on yesterday's date with second usage pattern information collected on today's date and may identify the difference between the first usage pattern information and the second usage pattern information. The processor 120 may generate a first usage pattern report 501 based on the identified difference and may display the first usage pattern report 501 through the display 160.

For example, the processor 120 may compare the first usage time of a first application executed based on yesterday's date with the second usage time of the first application executed based on today's date, and if the usage time has increased relatively compared to yesterday, generate a first usage pattern report 501 based on the change in the usage pattern of the first application (e.g., increase or decrease in usage time). The first usage pattern report 501 may be prepared in a text form and may include guidance information related to an increase in usage time of the first application. According to an embodiment, the processor 120 may provide guidance information on the utilization of the first application as the first usage pattern report 501 so that the user may efficiently utilize the electronic device 101.

According to an embodiment, the processor 120 may extract at least one word (e.g., expression) included in the first usage pattern report 501 and may identify the application corresponding to the extracted word. The processor 120 may display the icon 521 or 523 corresponding to the identified application with a visual effect (e.g., emphasis effect, highlight effect). With reference to the first user interface of FIG. 5, the processor 120 may identify words extracted from the first usage pattern report 501 (e.g., word related to Internet application (e.g., web browser), word related to message application), and may identify a first icon 521 corresponding to an Internet-related application and a second icon 523 corresponding to a message-related application based on the extracted words. When displaying the first user interface, the processor 120 may display the first icon 521 and the second icon 523 with visual effects (e.g., highlight effect).

With reference to FIG. 6, the processor 120 may display a second user interface prepared based on second usage history information (e.g., weekly usage time) corresponding to the second period when the program managing the usage time is executed. For example, the second user interface may include a second usage pattern report 601 that advises on the efficient utilization of the electronic device 101. According to an embodiment, when displaying the second user interface, in relation to the usage of a plurality of applications installed on the electronic device 101, the processor 120 may divide the usage time of the electronic device 101 by day of the week according to the second period, and may graphically display the daily usage of the electronic device 101 for each day of the week as a graph 611. For example, the graph 611 may represent the usage time of the electronic device 101 proportionally divided by day of the week (e.g., Monday, Tuesday, Wednesday, Thursday, Friday, Saturday, Sunday).

The electronic device 101 according to FIG. 6 may compare first usage pattern information collected during the second period (e.g., a period of about one week, last week) and second usage pattern information collected during a one-month period based on the current time, and may identify differences between the first usage pattern information and the second usage pattern information. The processor 120 may generate a second usage pattern report 601 based on the identified differences and may display the second usage pattern report 601 through the display 160.

For example, the processor 120 may compare a first usage ratio of the first application used for a period of about one week with a second usage ratio of the first application used for a period of about one month. If the first usage ratio of the first application has increased relatively more than the second usage ratio, the processor 120 may recognize a change in the usage pattern of the first application (e.g., increase in usage ratio) and may generate a second usage pattern report 601 based on the change in the usage pattern. The second usage pattern report 601 may be prepared in a text form and may include guidance information related to an increase in the usage ratio of the first application. According to an embodiment, the processor 120 may provide guidance information on the usage of the first application as a second usage pattern report 601 so that the user may efficiently utilize the electronic device 101.

With reference to FIG. 6, the processor 120 may identify usage ratio information 621 (e.g., about 1%) while driving and/or usage ratio information 623 (e.g., about 14%) while walking, and may further display supplementary information 613 according to the usage environment (e.g., usage condition, walking state, driving state, excessive volume state (usage time when the audio volume is set higher than a reference value)) based on the second user interface. According to an embodiment, the processor 120 may provide a second usage pattern report 601 containing guidance information for the proper usage habits of the electronic device 101 based on the supplementary information 613.

According to an embodiment, the processor 120 may extract at least one word (e.g., expression) included in the second usage pattern report 601 and may identify data corresponding to the extracted word. For example, if the second usage pattern report 601 includes guidance information such as "Using the electronic device while walking may be dangerous. Please refrain from using the electronic device while walking", the processor 120 may extract words such as "while walking", "danger", and "refrain", identify data related to the extracted words (e.g., "usage ratio while walking" information 623), and apply visual effects 624 (e.g., emphasis effect, highlight effect) based on the identified data. With reference to the second user interface of FIG. 6, the processor 120 may identify words (e.g., "while walking", "danger", "refrain") extracted from the second usage pattern report 601, identify "usage ratio while walking" information 623 associated with the extracted words, and display the "usage ratio while walking" information 623 with a visual effect (e.g., emphasis effect).

A method for an electronic device 101 to provide a usage pattern report according to an embodiment may include: generating, in response to execution of an application managing usage history information for the electronic device 101, a user interface based on the usage history information; determining, when a user interaction with the user interface is detected, whether a period corresponding to the user interaction exceeds a specified period; displaying, if the period corresponding to the user interaction does not exceed the specified period, a first usage pattern report generated based on first usage history information corresponding to a first period; and transmitting, if the period corresponding to the user interaction exceeds the specified period, first data generated based on second usage history information corresponding to a second period longer than the first period to an external electronic device, obtaining second data generated based on the first data from the external electronic device, and displaying a second usage pattern report generated based on the second data corresponding to the second period.

The method according to an embodiment may further include displaying one of the first usage pattern report and the second user pattern report based on the generated user interface.

The method according to an embodiment may further include performing at least some encoding operations based on the at least one application and category information associated with the at least one application, and generating the first data containing the encoded information.

According to an embodiment, the second data may include the second usage pattern report generated based on analysis results of the first data after the first data is analyzed by the external electronic device.

The method according to an embodiment may further include identifying, when the second data is obtained from the external electronic device, the second usage pattern report included in the second data, and displaying the second usage pattern report through the display 160 of the electronic device 101.

According to an embodiment, the first usage pattern report and the second usage pattern report may include usage pattern information classified based on the type of the at least one application and the category information of the at least one application.

According to an embodiment, the first usage pattern report and the second usage pattern report may include usage pattern information classified based on the user's environment information (e.g., driving situation, walking situation).

The method according to an embodiment may further include extracting at least one word based on a usage pattern report being displayed through the display, and displaying usage pattern information corresponding to the extracted at least one word with a highlight.

The method according to an embodiment may further include displaying guidance information related to the usage pattern information in response to a user input regarding the usage pattern information.

According to an embodiment, there may be disclosed a non-transitory computer-readable storage medium (or, computer program product) that stores one or more programs for executing a method of providing a usage pattern report of an electronic device 101. According to an embodiment, the one or more programs may include instructions that, when executed by a processor 120 of the electronic device 101, are configured to: generate, in response to execution of an application managing usage history information for the electronic device 101, a user interface based on the usage history information; determine, when a user interaction with the user interface is detected, whether a period corresponding to the user interaction exceeds a specified period; display, if the period corresponding to the user interaction does not exceed the specified period, a first usage pattern report generated based on first usage history information corresponding to a first period; and transmit, if the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.

According to an embodiment, the one or more programs may include instructions that, when executed by the processor 120 of the electronic device 101, are configured to: perform at least some encoding operations based on the at least one application and category information associated with the at least one application; transmit first data containing the encoded information to the external electronic device; obtain second data generated based on analysis results of the first data from the external electronic device after the first data is analyzed by the external electronic device; and identify the second usage pattern report based on the obtained second data.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160);
a processor (120); and
a memory (130) that stores usage history information related to at least one application and instructions,
wherein, when executed by the processor (120), the instructions cause the electronic device (101) to:
generate a user interface based on the usage history information in response to execution of an application managing the usage history information;
determine, when a user interaction with the user interface is detected, whether a period corresponding to the user interaction exceeds a specified period;
display, in case that the period corresponding to the user interaction does not exceed the specified period, a first usage pattern report generated based on first usage history information corresponding to a first period; and
transmit, in case that the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.

2. The electronic device of claim 1, wherein, when executed by the processor, the instructions cause the electronic device to display one of the first usage pattern report and the second user pattern report based on the generated user interface.

3. The electronic device of claim 1, wherein:
when executed by the processor, the instructions cause the electronic device to perform at least some encoding operations based on the at least one application and category information associated with the at least one application, and generate the first data containing the encoded information; and
the second data generated based on the first data includes the second usage pattern report generated based on analysis results of the first data after the first data is analyzed by the external electronic device.

4. The electronic device of claim 3, wherein, when executed by the processor, the instructions cause the electronic device to:
perform at least some decoding operations based on the second data when the second data is obtained from the external electronic device;
generate the second usage pattern report based on the decoded information; and
display the second usage pattern report through the display (160).

5. The electronic device of claim 1, wherein the first usage pattern report and the second usage pattern report include usage pattern information classified based on a type of the at least one application and category information of the at least one application.

6. The electronic device of claim 1, wherein the first usage pattern report and the second usage pattern report include usage pattern information classified based on user's environment information such as a driving situation or walking situation.

7. The electronic device of claim 1, wherein, when executed by the processor, the instructions cause the electronic device to:
extract at least one word based on a usage pattern report being displayed through the display;
display usage pattern information corresponding to the extracted at least one word with a highlight; and
display guidance information related to the usage pattern information in response to a user input regarding the usage pattern information.

8. A method for an electronic device (101) to provide a usage pattern report, the method comprising:
generating, in response to execution of an application managing usage history information for the electronic device (101), a user interface based on the usage history information;
determining, when a user interaction with the user interface is detected, whether a period corresponding to the user interaction exceeds a specified period;
displaying, in case that the period corresponding to the user interaction does not exceed the specified period, a first usage pattern report generated based on first usage history information corresponding to a first period; and
transmitting, in case that the period corresponding to the user interaction exceeds the specified period, first data generated based on second usage history information corresponding to a second period longer than the first period to an external electronic device, obtaining second data generated based on the first data from the external electronic device, and displaying a second usage pattern report generated based on the second data corresponding to the second period.

9. The method of claim 8, further comprising displaying one of the first usage pattern report and the second user pattern report based on the generated user interface.

10. The method of claim 8, further comprising:
performing at least some encoding operations based on at least one application installed on the electronic device (101) and category information associated with the at least one application; and
generating the first data containing the encoded information,
wherein the second data generated based on the first data includes the second usage pattern report generated based on analysis results of the first data after the first data is analyzed by the external electronic device.

11. The method of claim 10, further comprising:
performing, when the second data is obtained from the external electronic device, at least some decoding operations based on the second data;
generating the second usage pattern report based on the decoded information; and
displaying the second usage pattern report through the display (160) of the electronic device (101).

12. The method of claim 8, wherein the first usage pattern report and the second usage pattern report include usage pattern information classified based on a type of at least one application installed on the electronic device (101) and category information of the at least one application.

13. The method of claim 8, wherein the first usage pattern report and the second usage pattern report include usage pattern information classified based on user's environment information such as a driving situation or walking situation.

14. The method of claim 8, further comprising:
extracting at least one word based on a usage pattern report being displayed through the display;
displaying usage pattern information corresponding to the extracted at least one word with a highlight; and
displaying guidance information related to the usage pattern information in response to a user input regarding the usage pattern information.

15. A non-transitory computer-readable storage medium that stores one or more programs for executing a method of providing a usage pattern report of an electronic device (101),
wherein the one or more programs include instructions that, when executed by a processor (120) of the electronic device (101), are configured to:
generate, in response to execution of an application managing usage history information for the electronic device (101), a user interface based on the usage history information;
determine, when a user interaction with the user interface is detected, whether a period corresponding to the user interaction exceeds a specified period;
display, in case that the period corresponding to the user interaction does not exceed the specified period, a first usage pattern report generated based on first usage history information corresponding to a first period; and
transmit, in case that the period corresponding to the user interaction exceeds the specified period, first data generated based on second usage history information corresponding to a second period longer than the first period to an external electronic device, obtain second data generated based on the first data from the external electronic device, and display a second usage pattern report generated based on the second data corresponding to the second period.
